# FASCICULE DE BREVET EUROPEEN

(11) **EP 2 874 807 B1**
(45) Date de publication et mention de la délivrance du brevet: **23.12.2020**
(21) Numéro de dépôt: 13739662.8
(22) Date de dépôt: 17.07.2013
(51) Int. Cl.: B32B 1/08, F16L 33/01, F16L 11/08, B32B 27/18, B32B 27/32, B32B 27/30, B32B 27/08

(54) **CONDUITE FLEXIBLE DE TRANSPORT DE FLUIDE ET PROCEDÉ ASSOCIÉ**
BIEGSAMES ROHR ZUM FÖRDERN VON FLÜSSIGKEIT UND ZUGEHÖRIGES VERFAHREN
FLEXIBLE PIPE FOR CONVEYING FLUID AND ASSOCIATED METHOD

(30) Priorité: 20.07.2012 FR 1257056
(43) Date de publication de la demande: 27.05.2015
(73) Titulaire: Technip N-Power, 92400 Courbevoie (FR)
(72) Inventeur: BOURGET, Jean-Christophe, 76230 Bois-Guillaume (FR); EPSZTEIN, Thomas, 52130 Voillecomte (FR)
(74) Mandataire: Lavoix
(86) Numéro de dépôt international: PCT/EP2013/065087
(87) Numéro de publication internationale: WO 2014/012971

(56) Documents cités:
- EP-A1- 0 844 429
- WO-A1-2009/153451
- FR-A1- 2 827 032

## Description

La présente invention concerne une conduite flexible de transport de fluide, délimitant un passage central de circulation de fluide, comprenant :
- une première gaine en matériau polymère ;
- une deuxième gaine en matériau polymère disposée autour de la première gaine ;
- au moins une couche d'armures de traction et, à chaque extrémité de la conduite :
- un embout d'extrémité.

Une telle conduite est en particulier une conduite flexible de type non liée (« unbonded ») destinée au transport d'hydrocarbures gazeux ou biphasiques comprenant une phase gazeuse, et est par exemple, dévoilée par le document FR2827032.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

Une telle conduite flexible est généralement formée d'un ensemble de couches concentriques et superposées. Elle est considérée « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

De manière connue, les fluides transportés dans les conduites du type précité peuvent être maintenus sous une forte pression, par exemple supérieure à 100 bars et/ou sous une température élevée, par exemple supérieure à 70°C pendant de longues périodes de temps pouvant atteindre plusieurs années.

Le fluide pétrolier transporté par la conduite contient non seulement des hydrocarbures, mais peut comporter également d'autres composés, notamment des composés acides et corrosifs tels que le sulfure d'hydrogène (H₂S) et le dioxyde de carbone (CO₂).

Compte tenu de la forte pression et de la température élevée du fluide circulant à travers la conduite, les composés acides ont tendance à diffuser à travers la gaine interne de pression, et à s'accumuler dans l'espace intermédiaire recevant les nappes d'armures de traction.

Ces nappes étant généralement constituées de fils métalliques, les composés acides sont susceptibles de provoquer une corrosion accélérée de ces nappes. Une telle corrosion peut détériorer l'intégrité mécanique de la conduite, qui est en général fortement sollicitée par des efforts longitudinaux en traction et/ou en compression.

Pour pallier ce problème, EP-0 844 429 et WO 2009/153451 décrivent des conduites dans lesquelles au moins une gaine active destinée à réagir avec les composés acides est interposée entre le passage de circulation de fluide et les nappes d'armures.

Cette gaine active est par exemple formée d'une matrice en polymère dans laquelle est dispersé un produit actif chimiquement, apte à réagir avec les composés acides traversant cette gaine pour les neutraliser.

Ainsi, les composés acides sont transformés en d'autres composés neutres lorsqu'ils traversent la gaine active. Ceci limite le risque de corrosion des nappes d'armures lorsque les composés traités ressortent de la gaine active.

Une telle solution améliore donc grandement la résistance des nappes d'armures. Elle peut cependant encore être améliorée. En effet, pour assurer la connexion de la conduite flexible, il est nécessaire de prévoir des embouts aux extrémités de la conduite.

Le montage des embouts nécessite la réalisation d'une étanchéité au niveau de chaque gaine polymérique présente dans la conduite.

A cet effet, il est généralement nécessaire d'interposer une canule métallique entre la gaine de pression et la gaine active afin de sertir la gaine active.

Cette canule décolle localement la gaine active de la gaine de pression et engendre, en amont de la canule, une zone potentielle d'accumulation de gaz corrosifs. Dans cette zone, les gaz ayant traversé la gaine de pression au niveau de la canule migrent et s'accumulent, ce qui provoque dans certains cas une surconsommation locale de la gaine active.

Ce phénomène est observé particulièrement lorsque la pression totale dans le passage central de la conduite est faible, c'est-à-dire inférieure à 100 bars, plus précisément lorsqu'elle est comprise entre 5 bars et 60 bars. Typiquement, de telles pressions sont rencontrées lors d'une phase de maintenance de la conduite. Dans ce cas, un interstice de quelques dixièmes de millimètres est susceptible d'apparaitre entre la gaine de pression et la gaine active, ce qui facilite la migration des composés acides depuis l'extrémité arrière de la canule jusqu'à son extrémité avant.

Il est donc nécessaire d'augmenter substantiellement l'épaisseur de la gaine active pour pallier ce problème de surconsommation locale de la gaine active. Ceci augmente le coût de la conduite et son poids.

Un but de l'invention est donc d'obtenir une conduite flexible dans lequel le risque de corrosion des nappes d'armures est particulièrement faible, la conduite étant plus légère et moins onéreuse que les conduites connues.

A cet effet, l'invention a pour objet une conduite flexible selon les caractéristiques techniques de la revendication 1.

La conduite selon l'invention peut comprendre une ou plusieurs des caractéristiques suivantes, prise(s) isolément ou suivant toute combinaison techniquement possible :
- une au moins de la première gaine et de la deuxième gaine comporte un produit actif chimiquement, propre à réagir avec les composés acides provenant du fluide présent dans le passage central ;
- au moins une partie de la canule comporte une matrice en polymère, le produit actif étant dispersé sous forme de particules dans la matrice en polymère ;
- au moins une partie de la canule comporte une matrice en matériau céramique poreux, avantageusement fritté, le produit actif étant disposé sous forme d'une couche à la surface de la matrice ;
- la canule comporte une embase de support métallique et un insert perméable aux gaz, appliqué sur l'embase, l'insert contenant le produit actif ;
- la canule délimite un conduit axial d'évacuation de gaz, le conduit axial d'évacuation de gaz étant ménagé dans l'embase sans passer par l'insert, ou étant ménagé à travers l'embase et l'insert ;
- la canule présente une partie d'extrémité s'effilant longitudinalement, la partie d'extrémité effilée étant au moins partiellement formée par l'insert ;
- l'embase délimite un logement de réception de l'insert, l'insert étant totalement reçu dans le logement ;
- l'embase délimite un logement de réception de l'insert, l'insert comprenant une partie reçue dans le logement et une partie faisant saillie longitudinalement au-delà de l'embase, hors du logement ;
- l'insert est disposé totalement à l'extérieur de l'embase dans le prolongement axial de l'embase ;
- l'insert et l'embase sont fixés l'un sur l'autre par emboitement.
- la canule délimite au moins un conduit axial de circulation de gaz ;
- la canule présente une partie d'extrémité conique ;
- le conduit axial débouche axialement dans la partie d'extrémité conique.

Il est également dévoilé une canule, destinée à être disposée entre une première gaine en matériau polymère et une deuxième gaine en matériau polymère d'une conduite flexible de transport de fluide, munie d'au moins un produit actif chimiquement, propre à réagir avec des composés acides provenant du fluide transporté par la conduite à travers la première gaine. La canule comporte une partie centrale sensiblement cylindrique, et une partie intérieure d'extrémité, effilée vers un bord libre.

La canule peut comprendre l'une ou plusieurs des caractéristiques suivantes, prise(s) isolément ou suivant toute combinaison techniquement possible :
- elle comporte une embase métallique et un insert perméable au gaz appliqué sur l'embase et contenant le produit actif chimiquement.
- elle délimite un conduit axial de passage de gaz.
- la canule délimite un conduit axial d'évacuation de gaz, le conduit axial d'évacuation de gaz étant ménagé dans l'embase sans passer par l'insert, ou étant ménagé à travers l'embase et l'insert ;
- la partie d'extrémité effilée est au moins partiellement formée par l'insert ;
- l'embase délimite un logement de réception de l'insert, l'insert étant totalement reçu dans le logement ;
- l'embase délimite un logement de réception de l'insert, l'insert comprenant une partie reçue dans le logement et une partie faisant saillie longitudinalement au-delà de l'embase, hors du logement ;
- l'insert est disposé totalement à l'extérieur de l'embase dans le prolongement axial de l'embase ;
- l'insert et l'embase sont fixés l'un sur l'autre par emboitement ;
- la canule présente une partie d'extrémité conique ;
- le conduit axial débouche axialement dans la partie d'extrémité conique.

L'invention a également pour objet un procédé de transport de fluide, comprenant les étapes suivantes :
- fourniture d'une conduite telle que décrite plus haut ;
- circulation de fluide à travers le passage central délimité par la première gaine en matériau polymère ;
- perméation d'un composé acide à travers la première gaine ;
- traitement du composé acide par le produit actif présent dans la canule.

L'invention sera mieux comprise à la lecture de la description qui va suivre, donnée uniquement à titre d'exemple, et faite en se référant aux dessins annexés, sur lesquels :
- la figure 1 est une vue en perspective partiellement éclatée d'une conduite tubulaire flexible pour le transport d'un fluide pétrolier ;
- la figure 2 est une vue, prise en coupe partielle suivant un plan axial médian, de l'embout de la conduite de la figure 1, comprenant une canule ;
- la figure 3 est une vue en perspective de trois-quarts face d'une première canule ;
- la figure 4 est une vue prise en coupe suivant un plan axial médian de la canule de la figure 3 ;
- la figure 5 est une vue d'un détail marqué V de la figure 4.
- la figure 6 est une vue analogue à la figure 3 d'une deuxième canule ;
- la figure 7 est une vue analogue à la figure 4 de la deuxième canule ;
- la figure 8 est une vue analogue à la figure 3 d'une troisième canule ;
- la figure 9 est une vue analogue à la figure 4 de la troisième canule ;
- la figure 10 est une vue d'un détail marqué X de la figure 9 ;
- la figure 11 est une vue analogue à la figure 3 d'une quatrième canule ;
- la figure 12 est une vue analogue à la figure 4 de la quatrième canule.

Dans tout ce qui suit, les termes « amont » et « aval » s'entendent généralement par rapport au sens normal de circulation d'un fluide.

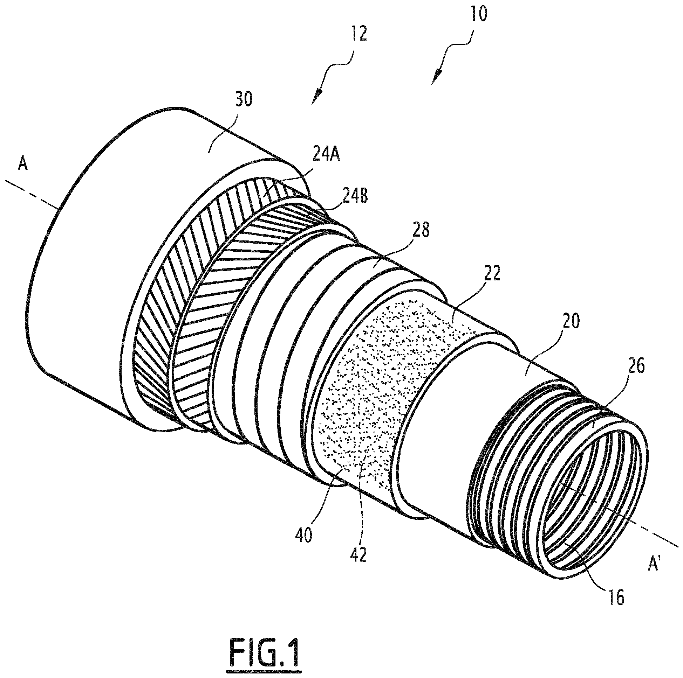

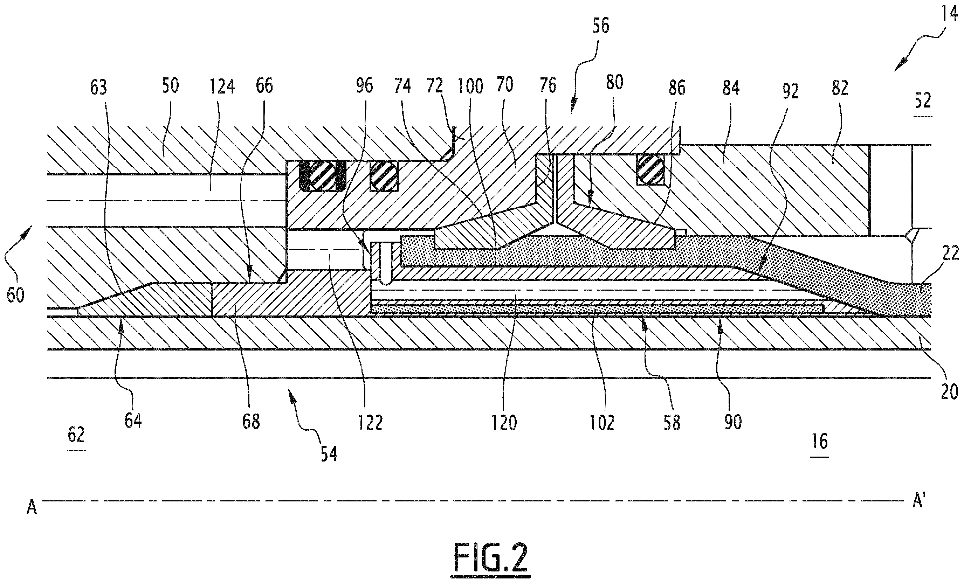

Une première conduite flexible 10 selon l'invention est illustrée partiellement par la figure 1 et par la figure 2.

La conduite flexible 10 comporte un tronçon central 12 illustré en partie sur la figure 1. Elle comporte, à chacune des extrémités amont et aval du tronçon central 12, un embout d'extrémité 14 (non visible sur la Figure 1) dont les parties pertinentes sont représentées sur la figure 2.

La conduite 10 délimite un passage central 16 de circulation d'un fluide, avantageusement d'un fluide pétrolier. Le passage central 16 s'étend suivant un axe A-A' entre l'extrémité amont et l'extrémité aval de la conduite 10 et débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface et un ensemble de fond (non représentés) qui sont généralement raccordés entre eux par la conduite flexible 10.

La conduite flexible est de préférence une conduite « non liée » (désignée par le terme anglais « unbonded »).

Au moins deux couches adjacentes de la conduite flexible 10 sont donc libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques qui s'étendent continûment le long du tronçon central 12 jusqu'aux embouts 14 situés aux extrémités de la conduite.

Selon l'invention, la conduite 10 comporte au moins une première gaine 20 à base de matériau polymère constituant avantageusement une gaine de pression, et au moins une deuxième gaine 22 à base de matériau polymère, disposée autour de la gaine interne 20. La deuxième gaine 22 constitue avantageusement une gaine active de traitement chimique des gaz corrosifs susceptibles d'être présents dans le passage central 16 et de traverser la première gaine 20.

La conduite 10 comporte en outre au moins une couche d'armures de traction 24A, 24B disposée extérieurement par rapport à la deuxième gaine 22.

Avantageusement, et selon l'utilisation souhaitée, la conduite 10 comporte en outre une carcasse interne 26 disposée à l'intérieur de la première gaine 20, une voûte de pression 28 intercalée entre la première gaine 20 et la ou chaque couche d'armures de traction 24A, 24B et une gaine externe 30, destinée à la protection de la conduite 10.

De manière connue, la première gaine 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la première gaine 20 et de la deuxième gaine 22. La conduite est de type « rough bore ».

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas courts, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la première gaine 20 et de la deuxième gaine 22. Elle est par exemple formée d'un fil profilé métallique entouré en hélice autour de la deuxième gaine 22. Le fil profilé présente généralement une géométrie complexe, notamment en forme de Z, de T, de U, de K, de X ou de I.

La voûte de pression 28 est enroulée en hélice à pas court autour de la deuxième gaine 22.

La conduite flexible 10 selon l'invention comprend au moins une couche d'armures 24A, 24B, formée d'un enroulement hélicoïdal d'au moins un élément d'armure allongé. Dans l'exemple représenté sur la figure 1, la conduite flexible 10 comporte une pluralité de couches d'armures 24A, 24B.

Chaque couche d'armures 24A, 24B comporte des éléments d'armure longitudinaux enroulés à pas long autour de l'axe A-A' de la conduite.

Par « enroulé à pas long », on entend que la valeur absolue de l'angle d'hélice est inférieure à 60°, et est typiquement comprise entre25° et 55°.

Les éléments d'armure d'une première couche 24A sont enroulés généralement suivant un angle opposé par rapport aux éléments d'armure d'une deuxième couche 24B. Ainsi, si l'angle d'enroulement des éléments de la première couche 24A est égal à + α, α étant compris entre 25° et 55°, l'angle d'enroulement des éléments d'armure de la deuxième couche d'armure 24B disposée au contact de la première couche d'armure 24A est par exemple de - a, avec α compris entre 25° et 55°.

Les éléments d'armure sont par exemple formés par des fils métalliques, ou des rubans.

La gaine externe 30 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Selon l'invention, la deuxième gaine 22, lorsqu'elle est présente est une gaine active. Elle présente une perméabilité réduite aux composés acides. Ainsi, la deuxième gaine 22 comporte une matrice 40, avantageusement réalisée en matériau polymère, et au moins un produit actif chimiquement 42 présent dans la matrice 40 et susceptible de réagir chimiquement avec les composés acides provenant du fluide présent dans le passage central 16 afin de bloquer leur diffusion au sein de la deuxième gaine 22.

Avantageusement, le produit actif est apte à neutraliser irréversiblement les effets corrosifs des composés acides et à limiter leur effet corrosif sur les couches d'armure 24A, 24B.

La matrice 40 est avantageusement réalisée en un matériau polymère analogue à celui de la première gaine 20, par exemple à base d'un polyoléfine, tel que du polyéthylène, à base d'un polyamide, tel que du PA11 ou du PA12, ou à base d'un polymère fluoré tel que du polyfluorure de vinylidène (PVDF).

Le produit actif chimiquement propre à réagir avec les composés acides est par exemple choisi parmi les produits décrits dans la demande de brevet européen EP 0 844 429.

Les produits chimiquement actifs peuvent être choisis parmi les oxydes métalliques. Les produits chimiquement actifs peuvent également être choisis parmi les carbonates métalliques, les chlorures métalliques, les formes hydratées des carbonates métalliques et des chlorures métalliques, les formes hydroxylées des carbonates métalliques et des chlorures métalliques, les carbonates alcalins, les carbonates alcalino-terreux, les chlorures alcalins, les chlorures alcalino-terreux, les formes hydratés des carbonates alcalins, des carbonates alcalino-terreux, des chlorures alcalins, des chlorures alcalino-terreux et les formes hydroxylées des carbonates alcalins, des carbonates alcalino-terreux, des chlorures alcalins, des chlorures alcalino-terreux.

La deuxième gaine 22 peut comporter, en outre, des charges de forme lamellaire ayant un coefficient de forme supérieur à 20, la concentration massique desdites charges lamellaires dans la gaine étant égale au maximum à 10%.

La deuxième gaine 22 peut comporter, en outre, des charges absorbantes qui piègent les composés acides, les charges absorbantes étant choisies parmi les charbons actifs, les zéolites et les alumines.

La deuxième gaine 22 comporte avantageusement des additifs pour améliorer les propriétés mécaniques de la matrice, les additifs étant choisis parmi les poly(ethylène-octène), des poly(éthylène-propylène), des poly(éthylène-butène) et les poly(styrène/éthylène-butylène/styrène). Les produits chimiquement actifs peuvent être traités chimiquement en surface avec des silanes. La gaine peut comporter des polyoléfines greffées anhydride maléique.

En particulier, les produits chimiquement actifs sont avantageusement choisis parmi les oxydes métalliques du type (Fe₂O₃, PbO, ZnO, NiO, CoO CdO, CuO, SnO₂, MoO₃, Fe₃O₄, Ag₂O CrO₂, CrO₃, Cr₂O₃, TiO, TiO₂ et Ti₂O₃) ou les oxydes alcalins ou alcalino- terreux (CaO, Ca(OH)₂, MgO), ou les composés comportant des fonctions aminés tels que les polyamines et les polyéthylènes polyamines.

Dans un mode de réalisation, la matrice comporte un seul type de produit actif. En variante, la matrice contient une combinaison de différents produits actifs, par exemple une combinaison de plusieurs oxydes métalliques, une combinaison d'oxydes métalliques avec des oxydes alcalins ou alcalinoterreux.

Les produits chimiquement actifs peuvent également être choisis parmi les carbonates métalliques (par exemple le ZnCO₃), ou les chlorures métalliques (par exemple le ZnC₂), ainsi que les formes hydratées et/ou hydroxylée des carbonates métalliques et des chlorures métalliques (par exemple le 2ZnCOₐ.3H₂O, le Zn(OH)₂, le Zn₅(CO₃)₂(OH)₆ ou le [Zn(OH)₂]₃.(ZnCO₃)₂). Les produits chimiquement actifs peuvent également être choisis parmi les carbonates alcalins, les carbonates alcalino-terreux, les chlorures alcalins et les chlorures alcalino-terreux (par exemple le Na₂CO₃ ou le CaCO₃), ainsi que les formes hydratées et/ou hydroxylées des carbonates alcalins, des carbonates alcalino- terreux, des chlorures alcalins et des chlorures alcalino-terreux.

Pour les produits actifs mentionnés ci-dessus, le principe de réaction consiste généralement à passer des dérivés oxydés, carbonatés, chlorés (éventuellement sous formes hydratées et ou hydroxylées) à des dérivés sulfurés (dans le cas d'une réaction avec H₂S) ou carbonatées (dans le cas d'une réaction avec CO₂). Dans le cas où seul le CO₂ est présent, les formes carbonatées des dérivés métalliques, des dérivés alcalins et des dérivés alcalino-terreux ne seront pas sélectionnés.

Avantageusement, la proportion massique du produit chimiquement actif dans la matrice est comprise entre 10% en masse et 50% en masse. Le produit actif présente de préférence une surface spécifique supérieure à 5 m²/g et en particulier au moins supérieure à 20 m²/g. De manière préférée, la surface spécifique du produit actif peut être inférieure à 50 m²/g.

Le produit actif est par exemple dispersé sous forme de particules. Il comporte alors avantageusement une surface spécifique supérieure à 5m²/g. Les particules présentent en particulier une granulométrie supérieure à 0,02 µm.

Selon une autre forme de réalisation de l'invention, la deuxième gaine 22 est une gaine polymérique à perméabilité réduite aux molécules d'eau (H₂O) ou gaine anti-H₂O dont la matrice 40 est avantageusement réalisée en un matériau polymère à base d'un polyoléfine, tel que du polyéthylène, ou à base d'un polymère fluoré tel que du polyfluorure de vinylidène (PVDF). Selon encore une autre forme de réalisation de l'invention, la deuxième gaine 22 est une simple gaine polymérique dont la matrice 40 est avantageusement réalisée en un matériau polymère analogue à celui de la première gaine 20, par exemple à base d'un polyoléfine, tel que du polyéthylène, à base d'un polyamide, tel que du PA11 ou du PA12, ou à base d'un polymère fluoré tel que du polyfluorure de vinylidène (PVDF).

Comme illustré par la figure 2, chaque embout 14 comporte une voûte d'extrémité 50 et un capot externe de liaison (non représenté), délimitant avec la voûte d'extrémité 50 un espace annulaire interne 52.

L'embout 14 comporte en outre un premier ensemble 54 de sertissage de la première gaine 20, un deuxième ensemble 56 de sertissage de la deuxième gaine 22 et, interposé entre l'ensemble de sertissage 54 et l'ensemble de sertissage 56, une canule active 58 selon l'invention.

L'embout 14 comprend de plus un ensemble (non représenté) de fixation des couches d'armure 24A, 24B, et un troisième ensemble (non représenté) de sertissage de la gaine externe 30.

L'embout 14 comporte en outre, de préférence, un ensemble 60 d'évacuation des gaz ayant traversé la première gaine 20. Dans une variante, l'ensemble 60 est destiné à une mesure de pression comme décrit dans la demande PCT/EP2012/052774 de la Demanderesse

Dans cet exemple la voûte d'extrémité 50 est destinée à raccorder la conduite 10 à un autre embout de connexion 14 ou à des équipements terminaux. Cette voûte 50 présente un alésage central 62 destiné à recevoir l'extrémité de la première gaine 20 et à permettre l'écoulement du fluide circulant à travers le passage central 16 vers l'extérieur de la conduite 10.

L'alésage central 62 est délimité, en regard de l'ensemble de sertissage 54, par une surface interne 63 convergeant axialement vers l'axe A-A' en se déplaçant vers l'extérieur de la conduite 10. La surface interne 63 est par exemple conique.

L'ensemble de sertissage 54 de la première gaine 20 comporte dans cet exemple une première bague de sertissage 64 et une voûte intermédiaire 66 de serrage axial de la première bague 64.

La première bague 64 est propre à être interposée entre la première gaine 20 et la surface convergente 63 pour s'insérer par déformation dans la première gaine 20, lorsque la voûte intermédiaire 66 est poussée vers la voûte d'extrémité 50 en appuyant sur la bague 64.

La voûte intermédiaire 66 comporte une partie intérieure 68 destinée à la poussée axiale de la première bague 64, une partie intermédiaire 70 d'appui de l'ensemble 56 de sertissage de la deuxième gaine 22, et une partie supérieure 72 de fixation sur la voûte d'extrémité 50.

La partie intermédiaire 70 délimite une surface 74 convergeant vers l'axe A-A' en se déplaçant vers l'extérieur de la conduite. La surface 74 est destinée à coopérer avec l'ensemble de sertissage 56. La partie intermédiaire 70 définit en outre une surface transversale 76 de butée de l'ensemble de sertissage 56.

La partie supérieure 72 de la voûte intermédiaire 66 est fixée sur la voûte d'extrémité 50 dans la cavité 52, par exemple par des vis.

L'ensemble de sertissage 56 de la deuxième gaine 22 comporte dans cet exemple une deuxième bague 80 et une bride de serrage 82 de la deuxième bague 80.

La bride de serrage 82 comporte une partie intérieure 84 définissant une surface 86 de serrage de la deuxième bague 80 et une partie supérieure (non représentée) destinée à être fixée sur la partie supérieure 72 de la voûte intermédiaire 66 et/ou sur la voûte d'extrémité 50.

La surface de serrage 86 converge vers l'axe A-A' en se déplaçant vers l'intérieur de la conduite 10.

La deuxième bague 80 est ici de forme biconique. Elle est insérée entre la voûte intermédiaire 66 et la bride de serrage 82 lors du serrage de la bride 82 sur la voûte 66.

La deuxième bague 80 est disposée axialement en regard de la canule 58, avec interposition de la deuxième gaine 22.

Ainsi, lors du serrage de la bride de sertissage 82 contre la voûte intermédiaire 66, les surfaces 74, 86 poussent les cônes de la deuxième bague 80 dans la deuxième gaine 22 par effet de coin, pour réaliser une étanchéité et un sertissage de cette gaine 22, en appui contre la canule 58.

Comme illustré par les figures 2 à 5, la canule 58 présente une forme générale tubulaire. Elle comporte une partie centrale 90 sensiblement cylindrique, et une partie intérieure d'extrémité 92, effilée vers un bord libre 94. La canule 58 comporte en outre, à l'opposé du bord libre 94, une partie de retenue 96 formée dans cet exemple par une collerette.

La canule 58 délimite une lumière centrale 98 d'axe A-A', à travers laquelle est insérée la première gaine 20.

Selon l'invention, la canule 58 est munie d'au moins un produit actif chimiquement propre à réagir avec les composés acides provenant du fluide présent dans le passage central à travers la première gaine 20. Le produit actif est tel que décrit plus haut dans le contexte de la gaine active 22.

Dans cet exemple, et comme illustré par les figures 2, 3 et 4, la canule 58 comporte ainsi une embase 100 de support, avantageusement métallique, et un insert 102 perméable au gaz, appliqué sur l'embase 100 et recevant le produit actif chimiquement, propre à réagir avec les composés acides.

Dans cet exemple, l'embase 100 s'étend sur toute la longueur de la canule 58, à l'extérieur de l'insert 102. Elle délimite une surface extérieure 104 de la canule 58.

L'embase 100 définit intérieurement un logement 106 de réception de l'insert, de forme complémentaire à celle de l'insert 102.

Le logement 106 est de forme sensiblement annulaire. Il est délimité axialement vers l'intérieur de la conduite 10 par un épaulement 108 de blocage axial de l'insert 102. L'épaulement 108 est avantageusement situé axialement en regard de la partie effilée d'extrémité 92.

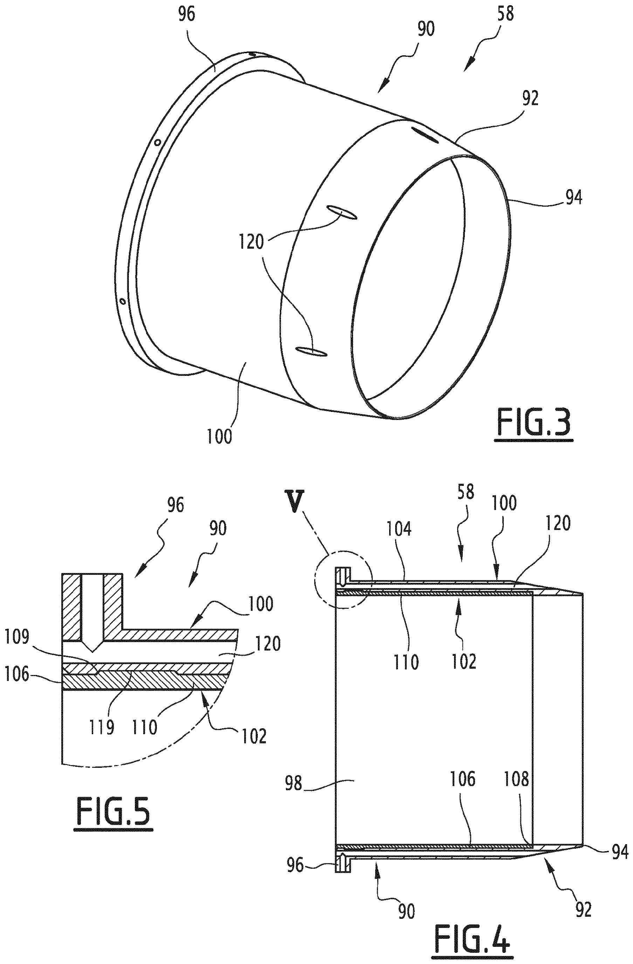

Comme illustré sur la Figure 5, le logement 106 présente une cavité 109 de blocage de l'insert 102 avantageusement circonférentielle débouchant vers l'axe A-A'. La cavité 109 est située au voisinage de la partie de retenue 96.

L'insert 102 comporte un manchon 110 avantageusement cylindrique disposé dans le logement interne 106. Le manchon 110 présente une forme sensiblement complémentaire à celle du logement 106. Ainsi, le manchon 110 affleure la surface interne de l'embase 100 en regard de l'épaulement 108.

Le manchon 110 présente une surface interne découverte, destinée à être placée en regard de l'interstice défini entre la canule 58 et la gaine interne 20.

Dans cet exemple, l'insert 102 est totalement reçu dans l'embase 100 sans dépasser axialement de celle-ci. Ainsi, la longueur du manchon 110 est inférieure à la longueur de la canule 58.

Dans un premier mode de réalisation, l'insert 102 comporte une matrice en polymère, le produit actif chimiquement étant dispersé dans la matrice en polymère. Dans ce mode de réalisation, la matrice en polymère est par exemple choisie parmi l'un des polymères précédemment définis pour la matrice pour la gaine interne, notamment à base d'un polyoléfine, tel que du polyéthylène, à base d'un polyamide, tel que du PA11 ou du PA12, ou à base d'un polymère fluoré tel que du polyfluorure de vinylidène (PVDF).

Le produit actif est tel que défini plus haut pour la deuxième gaine 22. Il ne sera pas décrit plus en détail.

La teneur massique en produit chimiquement actif dans la matrice en polymère est par exemple comprise entre 10% et 50% en masse.

Le produit actif est avantageusement dispersé sous forme de particules présentant une surface active supérieure à 5 m²/g, comme décrit dans la demande de brevet WO 2009/153451 pour la gaine active 22.

Dans un deuxième mode de réalisation, la matrice de l'insert 102 est formée à base d'un matériau céramique poreux, avantageusement fritté. Le produit actif est alors disposé sous forme d'une couche portée par la matrice de l'insert 102. Cette couche est par exemple une couche intérieure disposée sur une surface intérieure de la matrice. Le produit actif est par exemple l'un des composés définis plus haut pour la gaine active.

L'insert 102 est fixé axialement dans l'embase 100 par emboitement, et par blocage sur l'épaulement axial 108.

L'insert 102 comporte au moins une saillie radiale de blocage 119 de forme complémentaire à la cavité 109. La saillie 119 s'insère dans la cavité 109. L'épaisseur de l'insert 102 est inférieure à celle de l'embase 100, au niveau de la partie centrale 90 de la canule 58.

En référence à la figure 2 l'ensemble 60 d'évacuation des gaz comporte au moins un conduit interne 120 ménagé axialement à travers la canule 58, au moins un canal intermédiaire 122 ménagé à travers la voûte intermédiaire 66 et un canal aval 124 ménagé à travers la voûte d'extrémité 50.

Dans l'exemple représenté sur les figures 3, 6 et 11, la canule 58 comporte une pluralité de conduits internes 120 espacés angulairement autour de l'axe A-A'. Chaque conduit 120 s'étend axialement le long de la canule 58 et débouche en amont dans la partie d'extrémité effilée 92, en regard de l'espace intermédiaire entre la première gaine 20 et la deuxième gaine 22.

Chaque conduit 120 débouche en aval dans le canal intermédiaire 122. Avantageusement, le conduit 120 débouche transversalement hors de la canule 58 à travers la partie de retenue 96.

Le canal intermédiaire 122 s'étend axialement à travers la voûte intermédiaire 66 entre la partie intérieure 68 et la partie intermédiaire 70. Il est raccordé en aval au canal aval 124.

Le canal aval 124 s'étend à travers la voûte d'extrémité 50. Il débouche en aval hors de l'embout 14 à travers un orifice de sortie (non représenté).

Cet orifice de sortie peut être équipé d'une soupape différentielle de drainage telle que décrite dans le document WO 95/56045. Une telle soupape est destinée à s'ouvrir dès que la pression régnant dans le canal aval 124 est supérieure à une valeur déterminée. En variante, l'orifice de sortie est connecté à un analyseur de gaz, de type connu, de manière à quantifier la composition gazeuse au niveau de l'interstice entre les gaines polymériques 20, 22, notamment en vue de déterminer ou non la présence de composés acides tels que le sulfure d'hydrogène ou le dioxyde de carbone.

En variante ou en complément, l'orifice de sortie est raccordé à un système de mesure de débit des gaz et/ou de la température des gaz, tel qu'un capteur de la mesure de la température des gaz. Il peut aussi être raccordé à un système connu de mesure de la pression différentielle des gaz entre cet orifice de sortie et le passage intérieur 16 de la conduite.

Selon une variante de réalisation de l'invention, l'ensemble 60 d'évacuation des gaz comportant au moins un conduit interne 120 ménagé axialement à travers la canule 58, au moins un canal intermédiaire 122 ménagé à travers la voûte intermédiaire 66 et un canal aval 124 ménagé à travers la voûte d'extrémité 50, est optionnel.

Le montage de l'embout 14 de la conduite 10 va maintenant être décrit.

Pour réaliser l'étanchéité au niveau de l'embout 14 de la conduite 10, la première bague 64 de l'ensemble de sertissage 54 est tout d'abord introduite entre la voûte d'extrémité 50 et la première gaine 20. Puis, la voûte intermédiaire 70 est insérée.

La canule 58 est placée entre la première gaine 20 et la deuxième gaine 22. La partie d'extrémité effilée 92 est disposée au niveau du point de décollement entre la première gaine 20 et la deuxième gaine 22.

Puis, la deuxième bague 80 de l'ensemble de sertissage est disposée entre la deuxième gaine 22 et la voûte intermédiaire 66.

La bride de serrage 82 est alors montée entre la deuxième gaine 22 et les couches d'armures 24A, 24B pour être placée au contact de la bague 80.

Ensuite, la bride de sertissage 82 est serrée contre la voûte intermédiaire 68. Ceci provoque, par effet de coin sur les surfaces 74, 86, la pénétration des cônes de la bague 80 dans la deuxième gaine 22.

Le serrage de la voûte intermédiaire 66 contre la voûte d'extrémité 50 provoque par ailleurs une poussée axiale de la première bague 64 contre la voûte d'extrémité 50 et son insertion partielle dans la première gaine 20 par effet de coin sur la surface 63.

Les couches d'armures 24A, 24B sont ensuite fixées à l'extérieur de la voûte intermédiaire 70 et de la bride de sertissage 82.

La gaine externe 30 est ensuite sertie par le troisième ensemble de sertissage et le capot d'extrémité est monté sur la voûte 50 autour des ensembles 54, 56, pour obturer l'embout.

En fonctionnement, un fluide circule dans le passage central 16 de la conduite 10. Lorsque des gaz acides provenant de ce fluide traversent la première gaine 20, au niveau de l'interstice présent entre la première gaine 20 et la canule 58, ils entrent en contact avec le produit actif chimiquement présent dans l'insert 102.

Les gaz corrosifs sont donc traités sur leur trajet vers la région de décollement de la deuxième gaine 22 par rapport à la première gaine 20. Puis, les gaz traités sont collectés dans chaque conduit interne 120 et sont évacués hors de la conduite 10 à travers le conduit interne 120, le canal intermédiaire 122, et le canal de sortie 124.

La présence de produits actifs chimiquement dans l'insert 102 garantit que les gaz extraits à travers la première gaine 20 ne s'accumulent pas au niveau de la région de décollement, et ne provoquent donc pas de surconsommation locale de la gaine active 22.

L'épaisseur de la gaine active 22 peut donc être diminuée, ce qui allège la conduite 10 et réduit son coût. Ce résultat est obtenu de manière simple en maintenant l'intégrité des couches d'armures 24A, 24B.

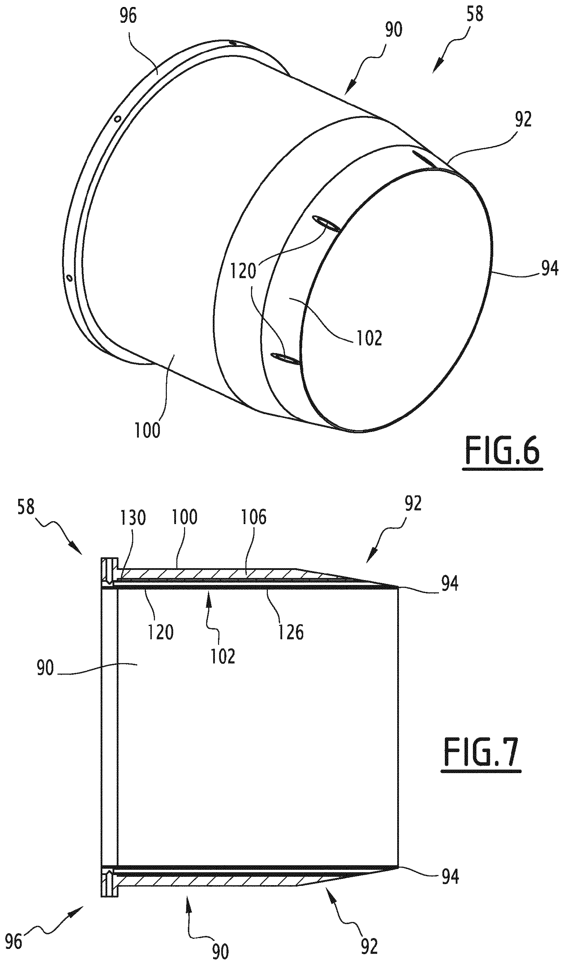

Une deuxième canule 58 selon l'invention est illustrée par les figures 6 et 7. Contrairement à la première canule 58 illustrée par la figure 3, l'embase 100 s'étend sur une partie seulement de la longueur de la canule 58. Le logement 106 débouche axialement vers l'intérieur de la conduite, et délimite un épaulement extérieur 130 vers l'extérieur de la conduite.

L'insert 102 fait saillie au moins partiellement au-delà du logement 106, vers l'intérieur de la conduite 10, et délimite ainsi un tronçon de la partie effilée 92 qui se prolonge jusqu'au bord libre 94.

Dans cette canule 58, le conduit interne 120 est délimité dans l'insert 102 entre la partie d'extrémité 92 et la partie de retenue 96, puis dans l'embase 100 au niveau de la partie de retenue 96.

En variante, un tube métallique 126 est avantageusement inséré dans chaque conduit 120 pour renforcer la structure mécanique de l'insert 102, et fixer axialement l'insert 102 sur l'embase 100. Préférentiellement, le tube métallique 126 est soudé à l'épaulement extérieur 130 de la canule 58.

Dans cette configuration, l'extrémité intérieure de l'insert 102 est donc placée directement dans la région de décollement entre la première gaine 20 et la deuxième gaine 22. Ceci assure une consommation efficace des gaz corrosifs éventuels pouvant s'accumuler dans cette région, et évite une surconsommation locale de la gaine active 22.

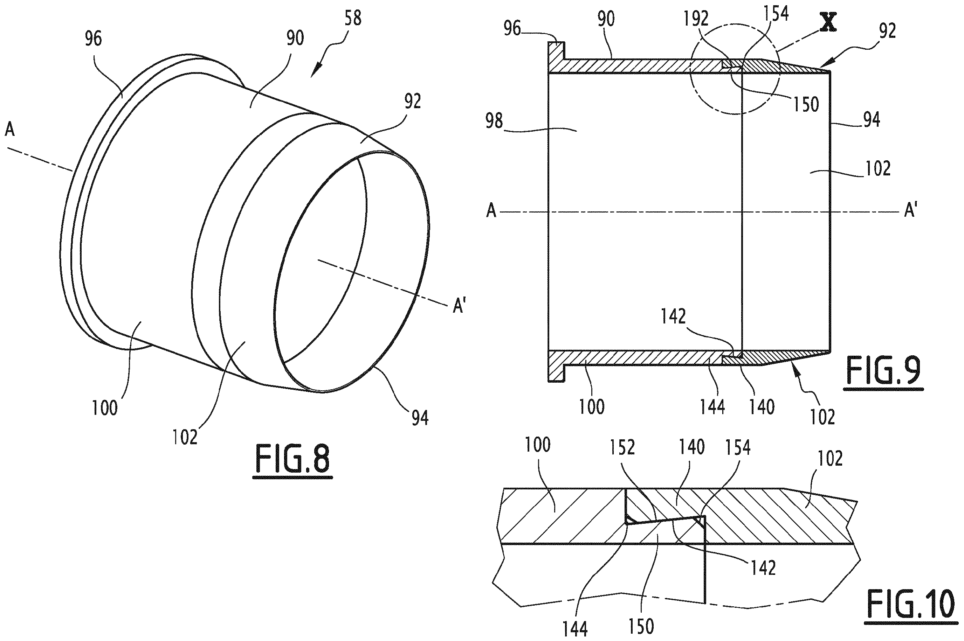

Une troisième canule 58 est représentée sur les figures 8 à 10. L'insert 102 est ici situé à l'extrémité de l'embase 100 et est fixé par emboitement sur l'embase 100.

A cet effet, l'insert 102 délimite une lèvre extérieure 140 présentant une section transversale croissante en se déplaçant axialement vers l'embase 100.

La lèvre extérieure 140 définit ainsi une surface intérieure 142 inclinée vers l'axe A-A' de la conduite 10 en se déplaçant vers l'extérieur de la conduite 10.

La surface intérieure 142 est biseautée au niveau de son extrémité libre intérieure 144.

L'embase 100 délimite une lèvre intérieure 150 destinée à s'engager dans la lèvre extérieure 140 de l'insert 102.

La lèvre intérieure 150 présente une section transversale croissante en se déplaçant vers l'insert 102.

Elle définit ainsi une surface extérieure 152 divergent à l'écart de l'axe A-A' de la conduite 10 en se déplaçant vers l'insert 102. La surface extérieure 152 est biseautée au niveau de son extrémité libre 154.

Ainsi, l'insert 102 est fixé axialement sur l'embase 100 par emboitement de la lèvre extérieure 140 autour de la lèvre intérieure 150. La retenue de l'insert 102 est assurée par la coopération entre les surfaces 142, 152 en contact sur les lèvres 140, 150. L'insertion et l'assemblage de l'insert 102 sur l'embase 100 est facilité par la présence des biseaux sur les bords libres 144, 154 respectifs.

Avantageusement, dans ce mode de réalisation, la canule 58 est dépourvue de conduit 120 interne d'évacuation des gaz. Les parois de l'embase 100 et l'insert 102 sont pleines.

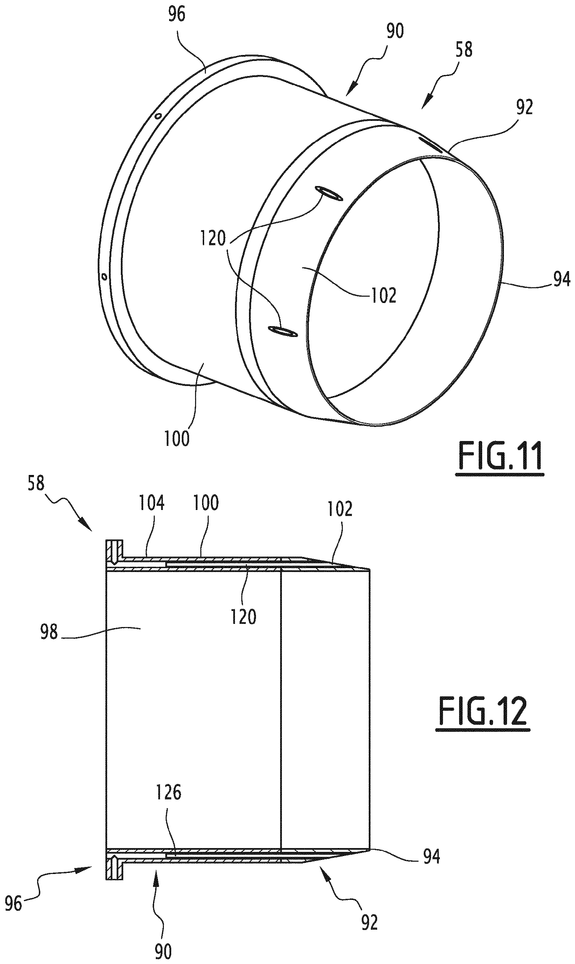

Une quatrième canule 58 est représentée sur les figures 11 et 12.

A la différence de la première canule 58 représentée sur les figures 3 et 4, l'insert 102 est disposé totalement à l'extérieur de l'embase 100. Ainsi, l'insert 102 est monté dans le prolongement axial de l'embase 100, en étant appliqué sur une surface annulaire d'extrémité de l'embase 100.

L'insert 102 forme donc un tronçon intérieur de la partie centrale 90 de la canule 58, et la partie d'extrémité effilée 92 de la canule 58.

Le conduit interne 120 est délimité en partie dans l'embase 100, et en partie dans l'insert 102. Un tube métallique 126 est inséré dans chaque conduit interne 120 pour assurer le renfort de l'insert 102 au niveau du conduit interne 120, et la fixation axiale de l'insert 102 par rapport à l'embase 100. Le tube métallique 126 permet aussi de drainer les gaz présents en amont de la partie effilée 92.

Le fonctionnement de cette canule 58 est analogue à celui des canules 58 décrites précédemment.

L'insert 102 peut être fabriquée selon divers moyens de mis en oeuvre. L'insert 102 peut être extrudé, injecté ou appliqué par projection thermique sur la surface de l'épaulement extérieur 130 de la canule 58. De plus, une étape supplémentaire d'usinage ou de soudage de l'insert 102 peut être requise afin qu'il s'adapte convenablement à la canule 58. Ces moyens de mise en œuvre de l'insert 102 peuvent être utilisés seuls ou en combinaison avec les étapes d'usinage ou de soudage.

Bien entendu, les modes de réalisation décrit précédemment ne sont donnés qu'à titre d'exemples non limitatifs. D'autres variantes d'exécution peuvent être réalisées selon les revendications dépendantes de l'invention.

## Revendications

1. Conduite flexible (10) de transport de fluide délimitant un passage central (16) de circulation de fluide, comprenant :
- une première gaine (20) en matériau polymère ;
- une deuxième gaine (22) en matériau polymère disposée autour de la première gaine (20);
- au moins une couche d'armures (24A, 24B) de traction et, à chaque extrémité de la conduite (16) :
- un embout d'extrémité (14) ;
et où au moins un des embouts d'extrémité (14) comporte une canule (58) disposée entre la première gaine (20) et la deuxième gaine (22) au contact d'au moins une desdites gaines (20, 22) ; la conduite flexible (10) étant **caractérisée en ce que** a canule (58) est munie d'au moins un produit actif chimiquement (42) propre à réagir avec les composés acides provenant du fluide présent dans le passage central (16) à travers la première gaine (20).

2. Conduite (10) selon la revendication 1, **caractérisée** en qu'une au moins de la première gaine (20) et de la deuxième gaine (22) comporte un produit actif chimiquement, propre à réagir avec les composés acides provenant du fluide présent dans le passage central (16).

3. Conduite (10) selon l'une quelconque des revendications précédentes, **caractérisée en ce qu'**au moins une partie (102) de la canule (58) comporte une matrice en polymère, le produit actif étant dispersé sous forme de particules dans la matrice en polymère.

4. Conduite (10) selon l'une ou quelconques des revendications 1 à 3, **caractérisée en ce qu'**au moins une partie (102) de la canule (58) comporte une matrice en matériau céramique poreux, avantageusement fritté, le produit actif étant disposé sous forme d'une couche à la surface de la matrice.

5. Conduite (10) selon l'une quelconque des revendications précédentes, **caractérisée en ce que** la canule (58) comporte une partie centrale (90) sensiblement cylindrique, et une partie d'extrémité (92), effilée vers un bord libre (94).

6. Conduite (10) selon la revendication 5, **caractérisée en ce que** la canule (58) comporte, à l'opposé du bord libre (94), une partie de retenue (96) formée par une collerette.

7. Conduite (10) selon l'une quelconque des revendications précédentes, **caractérisée en ce que** la canule (58) comporte une embase (100) de support métallique et un insert (102) perméable aux gaz, appliqué sur l'embase (100), l'insert (102) contenant le produit actif.

8. Conduite (10) selon la revendication 7, **caractérisée** en que la canule (58) délimite un conduit axial (120) d'évacuation de gaz, ledit conduit axial étant ménagé dans l'embase (100) sans passer par l'insert (102), ou étant ménagé à travers l'embase (100) et l'insert (102).

9. Conduite (10) selon la revendication 5 prise en combinaison avec la revendication 7, **caractérisée en ce que** la partie d'extrémité (92) effilée de la canule (58) est au moins partiellement formée par l'insert (102).

10. Conduite (10) selon l'une quelconque des revendications 7 à 9, **caractérisée en ce que** l'embase (100) de la canule (58) délimite un logement (106) de réception de l'insert (102), l'insert (102) étant totalement reçu dans le logement (106).

11. Conduite (10) selon l'une quelconque des revendications 7 à 9, **caractérisée en ce que** l'embase (110) de la canule (58) délimite un logement (106) de réception de l'insert (102), l'insert (102) comprenant une partie reçue dans le logement (106) et une partie faisant saillie longitudinalement au-delà de l'embase (100), hors du logement (106).

12. Conduite (10) selon l'une quelconque des revendications 7 à 11, **caractérisée en ce que** l'insert (102) de la canule (58) est disposé totalement à l'extérieur de l'embase (100) dans le prolongement axial de l'embase (100).

13. Conduite (10) selon l'une quelconque des revendications 7 à 12, **caractérisée en ce que** l'insert (102) et l'embase (100) de la canule (58) sont fixés l'un sur l'autre par emboitement.

14. Procédé de transport de fluide, comprenant les étapes suivantes :
- fourniture d'une conduite (10) selon l'une quelconque des revendications 1 à 13 ;
- circulation de fluide à travers le passage central (16) délimité par la première gaine (20) en matériau polymère ;
- perméation d'un composé acide à travers la première gaine (20);
- traitement du composé acide par le produit actif présent dans la canule (58).

## Patentansprüche

1. Flexible Leitung (10) zum Fluidtransport, welche einen zentralen Durchlass (16) zur Fluidzirkulation begrenzt und welche aufweist:
- eine erste Umhüllung (20) aus einem Polymermaterial,
- eine zweite Umhüllung (22) aus einem Polymermaterial, welche um die erste Umhüllung (20) herum angeordnet ist,
- mindestens eine Zugarmierungsschicht (24A, 24B) und an jedem Ende der Leitung (16):
- ein Endansatzstück (14),
und wobei mindestens eines der Endansatzstücke (14) eine Kanüle (58) aufweist, welche zwischen der ersten Umhüllung (20) und der zweiten Umhüllung (22) in Kontakt mit mindestens einer der besagten Umhüllungen (20, 22) angeordnet ist, wobei die flexible Leitung (10) **dadurch gekennzeichnet ist, dass** die Kanüle (58) mit mindestens einem chemisch aktiven Produkt (42) bereitgestellt ist, welches imstande ist, mit den sauren Verbindungen zu reagieren, welche von dem Fluid stammen, welches in dem zentralen Durchgang (16) durch die erste Umhüllung (20) vorhanden ist.

2. Leitung (10) gemäß Anspruch 1, **dadurch gekennzeichnet, dass** mindestens eine der ersten Umhüllung (20) und der zweiten Umhüllung (22) ein chemisch aktives Produkt aufweist, welches imstande ist, mit den sauren Verbindungen zu reagieren, welche von dem Fluid stammen, welches in dem zentralen Durchgang (16) vorhanden ist.

3. Leitung (10) gemäß irgendeinem der vorherigen Ansprüche, **dadurch gekennzeichnet, dass** zumindest ein Teil (102) der Kanüle (58) eine Polymermatrix aufweist, wobei das aktive Produkt in Form von Partikeln in der Polymermatrix dispergiert ist.

4. Leitung (10) gemäß irgendeinem der Ansprüche 1 bis 3, **dadurch gekennzeichnet, dass** zumindest ein Teil (102) der Kanüle (58) eine Matrix aus einem porösen Keramikmaterial, welches vorzugsweise gesintert ist, aufweist, wobei das aktive Produkt in Form einer Schicht auf der Fläche der Matrix angeordnet ist.

5. Leitung (10) gemäß irgendeinem der vorherigen Ansprüche, **dadurch gekennzeichnet, dass** die Kanüle (58) einen zentralen Abschnitt (90), welcher im Wesentlichen zylindrisch ist, und einen Endabschnitt (92), welcher sich zu einem freien Rand (94) hin verjüngt, aufweist.

6. Leitung (10) gemäß Anspruch 5, **dadurch gekennzeichnet, dass** die Kanüle (58) entgegengesetzt zum freien Rand (94) einen Halteabschnitt (96) aufweist, welcher mittels eines Flansches gebildet ist.

7. Leitung (10) gemäß irgendeinem der vorherigen Ansprüche, **dadurch gekennzeichnet, dass** die Kanüle (58) einen metallischen Sockel (100) zum Stützen und einen Einsatz (102), welcher gasdurchlässig ist und welcher am Sockel (100) angebracht ist, aufweist, wobei der Einsatz (102) das aktive Produkt enthält.

8. Leitung (10) gemäß Anspruch 7, **dadurch gekennzeichnet, dass** die Kanüle (58) eine axiale Leitung (120) zum Ausleiten von Gas begrenzt, wobei die besagte axiale Leitung im Sockel (100) bereitgestellt ist, ohne den Einsatz (102) zu durchlaufen, oder durch den Sockel (100) und den Einsatz (102) bereitgestellt ist.

9. Leitung (10) gemäß Anspruch 5 in Kombination mit Anspruch 7, **dadurch gekennzeichnet, dass** der verjüngte Endabschnitt (92) der Kanüle (58) zumindest teilweise mittels des Einsatzes (102) gebildet ist.

10. Leitung (10) gemäß irgendeinem der Ansprüche 7 bis 9, **dadurch gekennzeichnet, dass** der Sockel (100) der Kanüle (58) eine Aufnahme (106) zum Aufnehmen des Einsatzes (102) aufweist, wobei der Einsatz (102) vollständig in der Aufnahme (106) aufgenommen ist.

11. Leitung (10) gemäß irgendeinem der Ansprüche 7 bis 9, **dadurch gekennzeichnet, dass** der Sockel (110) der Kanüle (58) eine Aufnahme (106) zum Aufnehmen des Einsatzes (102) aufweist, wobei der Einsatz (102) einen Abschnitt, welcher in der Aufnahme (106) aufgenommen ist, und einen Abschnitt, welcher in Längsrichtung außerhalb der Aufnahme (106) über den Sockel (100) herausragt, aufweist.

12. Leitung (10) gemäß irgendeinem der Ansprüche 7 bis 11, **dadurch gekennzeichnet, dass** der Einsatz (102) der Kanüle (58) in der axialen Erstreckung des Sockels (100) vollständig außerhalb des Sockels (100) angeordnet ist.

13. Leitung (10) gemäß irgendeinem der Ansprüche 7 bis 12, **dadurch gekennzeichnet, dass** der Einsatz (102) und der Sockel (100) der Kanüle (58) aneinander mittels Muffens befestigt sind.

14. Verfahren zum Fluidtransport, welches die folgenden Schritte aufweist:
- Bereitstellen einer Leitung (10) gemäß irgendeinem der Ansprüche 1 bis 13,
- Zirkulieren eines Fluids durch den zentralen Durchgang (16), welcher mittels der ersten Umhüllung (20) aus einem Polymermaterial begrenzt wird,
- Durchlassen einer sauren Verbindung durch die erste Umhüllung (20),
- Behandeln der sauren Verbindung mittels des aktiven Produkts, welches in der Kanüle (58) vorhanden ist.

## Claims

1. A flexible pipe (10) for conveying fluid delimiting a central bore (16) for circulation of the fluid, comprising
- a first sheath (20) made of polymer material;
- a second sheath (22) made of polymer material arranged around the first sheath (20);
- at least one tensile armour layer (24A, 24B) and, at each end of the pipe (16):
- an end fitting end (14);
and wherein at least one of the end fittings (14) includes a cannula (58) positioned between the first sheath (20) and the second sheath (22) in contact with at least one of the said sheaths (20, 22);
the flexible pipe being **characterized in that** the cannula (58) is provided with at least one chemically active product (42) that is capable of reacting with the acidic compounds originating from the fluid present in the central bore (16) through the first sheath (20).

2. A pipe (10) according to claim 1, **characterised in that** at least one of the first sheath (20) and the second sheath (22) includes a chemically active product, that is capable of reacting with the acidic compounds originating from the fluid present in the central bore (16).

3. A pipe (10) according to any one of the preceding claims, **characterised in that** at least a part (102) of the cannula (58) includes a polymer matrix, the active product being dispersed in the form of particles in the polymer matrix.

4. A pipe (10) according to one or any of claims 1 to 3, **characterised in that** at least a part (102) of the cannula (58) includes a matrix of porous ceramic material, advantageously sintered, the active product being disposed in the form of a layer at the surface of the matrix.

5. A pipe (10) according to any one of the preceding claims, **characterised in that** the cannula (58) comprises a central portion (90) that is substantially cylindrical, and an interior end portion (92), tapered towards a free edge (94).

6. A pipe (10) according to claim 5, **characterized in that** the cannula (58) comprises, opposite to the free edge (94), a retaining portion (96) formed by a neck flange.

7. A pipe (10) according to any one of the preceding claims, **characterised in that** the cannula (58) comprises a metal support base (100) and an insert (102) that is permeable to gas, applied on to the base (100) the insert (102) containing the active product.

8. A pipe (10) according to claim 7, **characterised in that** the cannula (58) delimits an axial gas discharge conduit (120), said axial gas discharge conduit being arranged in the base (100) without passing through the insert (102), or being arranged through the base (100) and the insert (102).

9. A pipe (10) according to claim 5 combined with claim 7, **characterised in that** the tapered end portion (92) of the cannula (58) is at least partially formed by the insert (102).

10. A pipe (10) according to any one of claims 7 to 9, **characterised in that** the base (100) of the cannula (58) delimits a housing (106) for accommodating the insert (102), the insert (102) being fully accommodated in the housing (106).

11. A pipe (10) according to any one of claims 7 to 9, **characterised in that** the base (110) of the cannula (58) delimits a housing (106) for accommodating the insert (102), the insert (102) comprising a portion that is accommodated within the housing (106) and a portion protruding out longitudinally beyond the base (100), out of the housing (106).

12. A pipe (10) according to any one of claims 5 to 9, **characterised in that** the insert (102) of the cannula (58) is disposed completely on the exterior of the base (100) in the axial extension of the base (100).

13. A pipe (10) according to any one of claims 7 to 12, **characterised in that** the insert (102) and the base (100) of the cannula (58) are fastened to one another by means of interlocking.

14. A method for conveying fluid, comprising of the following steps:
- provision of a pipe (10) according to any one of claims 1 to 13;
- circulation of fluid through the central bore (16) delimited by the first sheath (20) made of polymer material;
- permeation of an acidic compound through the first sheath (20);
- treatment processing of the acidic compound by the active product present in the cannula (58).
